# EUROPEAN PATENT SPECIFICATION

(11) **EP 4 357 243 B1**
(45) Date of publication and mention of the grant of the patent: **01.07.2026**
(21) Application number: 23204435.4
(22) Date of filing: 18.10.2023
(51) Int. Cl.: B64C 25/44, B60T 8/17, B60T 8/32, B64C 13/04, B60T 7/04, B60T 8/171

(54) **ADDITIONAL SAFETY FEATURE IN AIRCRAFT BRAKING SYSTEM**
ZUSÄTZLICHE SICHERHEITSFUNKTION IN EINEM FLUGZEUGBREMSSYSTEM
CARACTÉRISTIQUE DE SÉCURITÉ SUPPLÉMENTAIRE DANS UN SYSTÈME DE FREINAGE D'AÉRONEF

(30) Priority: 18.10.2022 IN 202241059474; 05.01.2023 US 202318093749
(43) Date of publication of application: 24.04.2024
(73) Proprietor: Goodrich Corporation, Charlotte, NC 28217-4578 (US)
(72) Inventor: BATHLA, Dharamveer, Bangalore (IN); MAHEVE, Manju, 560093 Bangalore, KA (IN); BURTE, Paul R., Clayton, 45315-9766 (US); MANI, Udhayakumar, Coimbatore (IN)
(74) Representative: Dehns

(56) References cited:
- EP-A1- 3 845 423
- EP-B1- 3 309 023
- US-A1- 2010 038 188
- US-B2- 10 564 662

## Description

### CROSS-REFERENCE TO RELATED APPLICATIONS

This application claims priority to, and the benefit of, India Provisional Patent Application No. 202241059474, filed October18, 2022 and titled "ADDITIONAL SAFETY FEATURE IN AIRCRAFT BRAKING SYSTEM," and US 18/093,749 filed 5 January 2023.

### FIELD

The present disclosure generally relates aircraft braking systems and more specifically to aircraft braking system safety features.

### BACKGROUND

Many aircraft include landing gear having wheel assemblies with independent braking for use during taxi, takeoff, and landing. The braking systems typically include a sensor that indicates a desired amount of braking to apply to each wheel. Sometimes, there may be an error reading the sensor which may result in uncommanded braking on one side of the wheels, resulting in the aircraft moving to one side. Document EP3309023B1 discloses, in its wording, a brake system for an aircraft including a pedal arrangement comprising a pedal, a first sensor to generate a first signal in response to translation of the pedal. Normal brake control logic controls the brake system in response to a normal condition being set. Emergency brake control logic controls the brake system in response to an emergency condition being set. Document US10564662B2 discloses a method of determining the state of a pedal actuator system within a vehicle includes receiving a position sensor signal indicative of a position of an actuator pedal within the pedal actuator system, receiving a force sensor signal indicative of a compressive force applied to the actuator pedal, and determining, with a processor, a state of the actuator pedal based on the position sensor signal and the force sensor signal.

### SUMMARY

A method for braking an aircraft is provided as defined by claim 1.

In various embodiments, the method further includes receiving, by the brake controller, a third signal from a second position sensor of a second pedal, receiving, by the brake controller, a fourth signal from a second pedal sensor of the second pedal, determining, by the brake controller, that the second pedal is being pressed further than the first pedal based on the third and fourth signals, and sending, by the brake controller, the instruction to apply the brake pressure based on the third signal.

In various embodiments, detecting, by the brake controller, a fault based at least in part on the first signal and the second signal prior to sending the instruction to apply the brake pressure.

Also disclosed herein is an article of manufacture as defined by claim 6.

In various embodiments, the operations further include calculating, by the brake controller, an amount of pressure to apply based on the first signal. In various embodiments, the operations further include receiving, by the brake controller, a second amount of pressure to apply from a second brake controller, comparing, by the brake controller, the amount of pressure to apply and the second amount of pressure to apply, and sending, by the brake controller, the instruction to apply the brake pressure in response to a determination that the amount of pressure and the second amount of pressure are the same.

In various embodiments, the operations further include identifying, by the brake controller, a fault based at least in part on the first signal and the second signal. In various embodiments, the operations further include receiving, by the brake controller, a third signal from a second position sensor of a second pedal, comparing, by the brake controller, the first signal and the third signal, and sending, by the brake controller, the instructions to apply the brake pressure based on the first signal, the first signal being greater than the second signal.

Also disclosed herein is a brake system for an aircraft as defined by claim 8.

In various embodiments, the determination that the pedal is being activated is based on the first signal. In various embodiments, the determination that the pedal is being activated is further based on the second signal. In various embodiments, the first signal provides an indication of how much pressure to apply to the brake assembly. In various embodiments, the pedal sensor provides an indication that the pedal is being pressed. In various embodiments, the brake controller is further configured to identify a fault in the brake system based at least in part on the first signal and the second signal.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates an aircraft having multiple landing gear and brakes, in accordance with various embodiments.
FIG. 2 illustrates a system architecture for a brake pedal and brake control units, in accordance with various embodiments.
FIG. 3 illustrates a system architecture for multiple brake pedals and brake control units, in accordance with various embodiments.
FIG. 4 illustrates a flow diagram of controlling braking for use in braking an aircraft, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

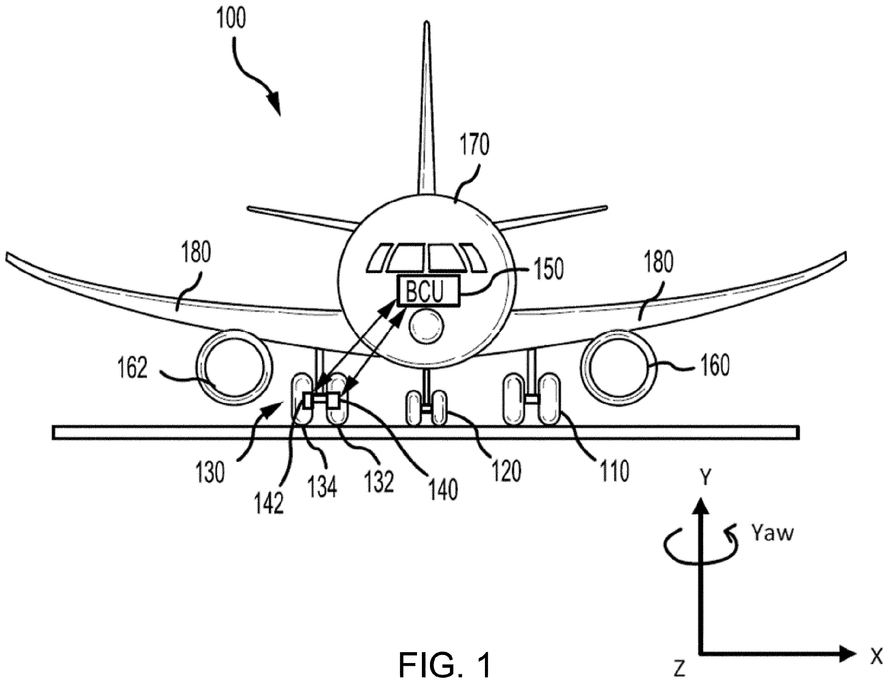

Referring now to FIG. 1, an aircraft 100 in accordance with various embodiments can include multiple landing gears including a first landing gear 110, a second landing gear 120, and a third landing gear 130. Each landing gear may include one or more wheel assemblies. For example, the third landing gear 130 includes an inner wheel assembly 132 and an outer wheel assembly 134.

The aircraft 100 may further include one or more brakes coupled to each wheel assembly. For example, a first brake 140 may be coupled to the inner wheel assembly 132, and a second brake 142 may be coupled to the outer wheel assembly 134. The first brake 140 may apply a braking force to the inner wheel assembly 132 upon receiving a brake command. Similarly, the second brake 142 may apply a braking force to the outer wheel assembly 134 upon receiving a brake command.

The aircraft 100 may further include a brake control unit (BCU) or brake controller 150. The brake controller 150 may include one or more processors and one or more tangible, non-transitory memories and be capable of implementing logic. The processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. In various embodiments, the brake controller 150 may be specifically designed for controlling operation of aircraft brakes. The brake controller 150 may control operation of the first brake 140 and the second brake 142 under normal operating conditions.

The aircraft 100 further comprises a first gas turbine engine 160 and a second gas turbine engine 162. Although described herein with respect to gas turbine engines 160, 162, the present disclosure is not limited in this regard. For example, electric engines, hydrogen engines, gas turbine engines, or any combination may be within the scope of this disclosure. The first gas turbine engine 160 and the second gas turbine engine 162 are disposed on opposite sides of a fuselage 170 of the aircraft 100. Although illustrated as being coupled to wings 180 of the aircraft 100, the present disclosure is not limited in this regard. For example, gas turbine engines 160, 162 may be coupled to the fuselage 170, in accordance with various embodiments. The gas turbine engines 160, 162 may be controlled by a pilot to generate thrust to accelerate the aircraft 100. In various embodiments, the first gas turbine engine 160 is on a left side of the aircraft 100 and the second gas turbine engine 162 is on a right side of the aircraft 100. Left and right as disclosed herein refer to a direction determined from a center of the fuselage 170 while facing a forward direction (i.e., a direction defined from a tail to a front end of aircraft 100).

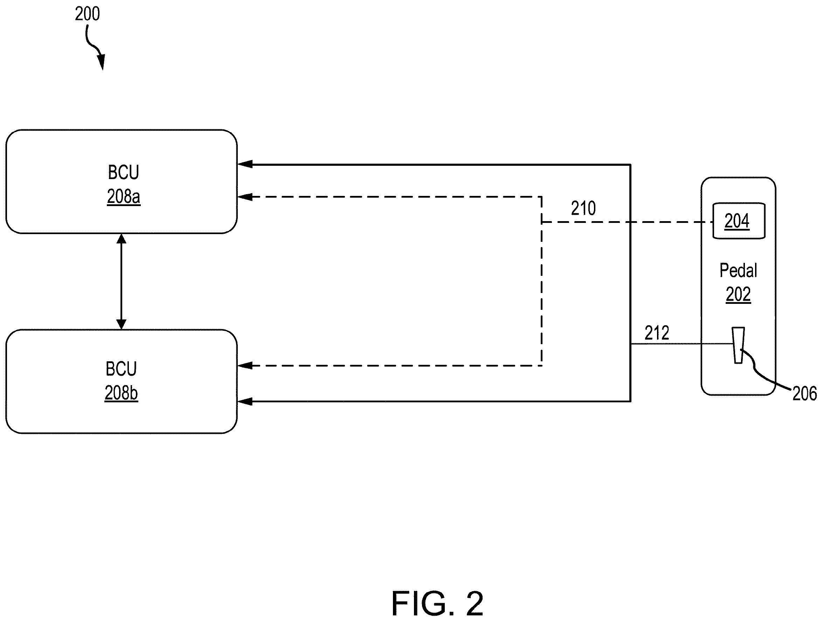

Referring now to FIG. 2, in accordance with various embodiments, a brake control architecture 200 is illustrated. Brake control architecture 200 includes a pedal 202, a position sensor 204, a pedal sensor 206, a first brake controller 208a, or BCU, and a second brake controller 208b, or BCU. Pedal 202 may be used by a pilot, or co-pilot, to control brakes of a landing gear, such as for example, first brake 140 and second brake 142 of third landing gear 130 described above with respect to FIG. 1.

Position sensor 204 is configured to send a position command 210 to first brake controller 208a and second brake controller 208b indicating the amount of braking to apply to the brakes associated with pedal 202. In various embodiments, the position sensor 204 may be a linear variable differential transformer (LVDT) that is configured to send position command 210 to the first brake controller 208a and second brake controller 208b. For example, command 210 may be a voltage related to a distance of travel of the LVDT. In other words, the LVDT provides an indication of the position of pedal 202, or in other words, how far pedal 202 is being pressed, or moved. First brake controller 208a and second brake controller 208b use the position of pedal 202, as provided by position sensor 204 in position command 210, to determine an amount of braking to apply to the wheel assembly (e.g., outer wheel assembly 134 and inner wheel assembly 132) by the brakes (e.g., first brake 140 and second brake 142).

Pedal sensor 206 detects if pedal 202 is being pressed, providing a second verification that pedal 202 is being pressed. Pedal sensor 206 is configured to send a pedal command 212 to first brake controller 208 and second brake controller 208b indicating the status of pedal 202, either pressed or not pressed. In various embodiments, pedal sensor 206 may output command 212 as a voltage, interpreted by first and second brake controllers 208a, 208b as a one or true, in response to pedal 202 being pressed. In various embodiments, pedal sensor 206 may provide no output, the lack of output being interpreted by first and second brake controllers 208a, 208b as a zero or false, in response to pedal 202 not being pressed. In various embodiments, pedal sensor 206 may output command 212 as a first voltage in response to pedal 202 being pressed and as a second lower voltage in response to pedal 202 not being pressed. Command 212 may be interpreted by first and second brake controllers 208a, 208b as a one, or true, when the first voltage is above a threshold, such as for example, 3.3 V. Command 212 may be interpreted by first and second brake controllers 208a, 208b as a zero, or false, when the output voltage is below the threshold.

In various embodiments, a single brake controller may be used. In various embodiments, first brake controller 208a and second brake controller 208b may compare outputs and apply braking in response to both brake controllers 208a and 208b providing the same output. In various embodiment, first brake controller 208a may be a primary brake controller and second brake controller 208b may be a secondary, or backup, brake controller. In various embodiments, first brake controller 208a may provide braking commands for first landing gear 110 and second brake controller 208b may provide braking commands for third landing gear 130. In various embodiments, first brake controller 208a may provide braking commands for the inboard wheels of first landing gear 110 and third landing gear 130 (e.g., first brake 140) and second brake controller 208b may provide braking commands for the outboard wheels of first landing gear 110 and third landing gear 130 (e.g., second brake 142).

Occasionally a fault, or error, occurs in brake control architecture 200. Such an error may result in one or more brakes being applied when the pilot and/or co-pilot did not intend to apply the brakes. For example, an error may cause first brake 140 and/or second brake 142 to be applied to third landing gear 130 while no brakes are applied to first landing gear 110. This may cause aircraft 100 to turn, or yaw, during take-off or landing, which may result in a catastrophic event including damage to the aircraft and injury to passengers and crew.

TABLE 1 is a logic truth table used by first brake controller 208a and second brake controller 208b. TABLE 1 includes eight rows and five columns. The first column is an index column for easier reference to the rows. The second column, Pilot Action, lists the intended action of the pilot, or co-pilot, either Pressed or Not Pressed. That is, Pilot Action indicates the presence of physical input on pedal 202. The third column, Position Sensor, states whether position sensor 204 is providing output (e.g., position command 210). A 1 indicates that position sensor 204 is providing output, and No Output indicates that position sensor 204 is not providing output. The fourth column, Pedal Sensor, states whether pedal sensor 206 is providing output (e.g., pedal command 212). A 1 indicates that pedal sensor 206 is providing output and No Output indicates that pedal sensor 206 is not providing output. The fifth column, Brake Application, provides the action taken by first and second brake controller 208a, 208b when provided the given inputs.

**TABLE 1**

| | **Pilot Action** | **Position Sensor** | **Pedal Sensor** | **Brake Application** |
|---|---|---|---|---|
| 1 | Pressed | 1 | 1 | Applied |
| 2 | Pressed | 1 | Out of Range | Applied |
| 3 | Not Pressed | 1 | Out of Range | Not Applied |
| 4 | Not Pressed | 1 | 0 | Not Applied |
| 5 | Pressed | No Output | 1 | Not Applied |
| 6 | Pressed | No Output | Out of Range | Not Applied |
| 7 | Not Pressed | No Output | Out of Range | Not Applied |
| 8 | Not Pressed | No Output | 0 | Not Applied |

At row 1, a normal operation condition with no faults is presented. The pilot is pressing pedal 202. Position sensor 204 sends position command 210 to first and second brake controller 208a, 208b in response to pedal 202 being pressed. Pedal sensor 206 sends pedal command 212 to first and second brake controller 208a, 208b in response to pedal 202 being pressed. First brake controller 208a and/or second brake controller 208b compare the inputs and apply the brakes in response to receiving position command 210 and pedal command 212.

At row 2, a faulty sensor output is detected. The pilot is pressing pedal 202. Position sensor 204 sends position command 210 to first and second brake controller 208a, 208b in response to pedal 202 being pressed. However, pedal sensor 206 sends a faulty command 212 to first and second brake controller 208a, 208b. For example, command 212 may be considered out of the range of the expected signal, either too high or too low. In various embodiments, pedal sensor 206 sends a digital signal that is expected to be between 2.5 volts and 3.5 volts and faulty command 212 may be about 4.5 volts, for example. While this indicates a problem with pedal sensor 206, this is the current operational state of first and second brake controllers 208a, 208b without pedal sensor 206. Therefore, first and second brake controllers 208a, 208b may apply the brakes, ignoring the No Output from pedal sensor 206.

At row 3, a faulty position sensor output is detected. The pilot is not pressing pedal 202. However, position sensor 204 sends a faulty position command 210 to first and second brake controller 208a, 208b and pedal sensor 206 sends a faulty pedal command 212 to first and second brake controller 208a, 208b. This is an error condition for both sensors and is recognized as such by the brake controller based in part on the faulty pedal command 212. For example, pedal command 212 may be faulty due to being outside of the range of the expected signal, either too high or too low.

At row 4, an un-commanded braking condition occurred. The pilot is not pressing pedal 202. However, position sensor 204 sends a faulty position command 210 to first and second brake controller 208a, 208b. Pedal sensor 206 works as intended, providing no output to first and second brake controllers 208a, 208b. In various embodiments, pedal sensor 206 may send a logical '0' to first and second brake controllers 208a, 208b. First and second brake controllers 208a, 208b compare the information available (i.e., command 210 and no command 212) and does not apply the brakes. The un-commanded braking condition present in row 4 is difficult to detect without pedal sensor 206. In such a condition, there is currently no way to detect whether the position command 210 is real and intended by the pilot. This may result in the pilot reacting incorrectly to a braking situation resulting in damage and/or injury.

At row 5, there is a loss of position signal. The pilot is pressing pedal 202. However, position sensor 204 is not providing output to first and second brake controllers 208a, 208b. Pedal sensor 206 sends pedal command 212 to first and second brake controller 208a, 208b in response to pedal 202 being pressed. While there is an indication that pedal 202 is being pressed, there is no indication as to how much braking to apply. Therefore, first and second brake controllers 208a, 208b do not apply the brakes.

At row 6, there is a loss of position signal and pedal signal. The pilot is pressing pedal 202, however, neither position sensor 204 nor pedal sensor 206 are outputting a signal. In various embodiments pedal sensor 206 may provide an output that is outside of the expected output range, either too high or too low. In this case, first and second brake controllers 208a, 208b do not apply the brakes.

At row 7, a faulty pedal sensor is detected. The pilot is not pressing pedal 202. Position sensor 204 is not outputting a signal but pedal sensor 206 is outputting a signal. In various embodiments, pedal sensor 206 may output a faulty signal that is either higher or lower than the expected signal range. This indicates a faulty pedal sensor 206.

At row 8, a normal operation condition with no faults is presented. The pilot is not pressing pedal 202. Both position sensor 204 and pedal sensor 206 do not output a signal to first and second brake controllers 208a, 208b. Therefore, first and second brake controllers 208a, 208b do not apply the brakes.

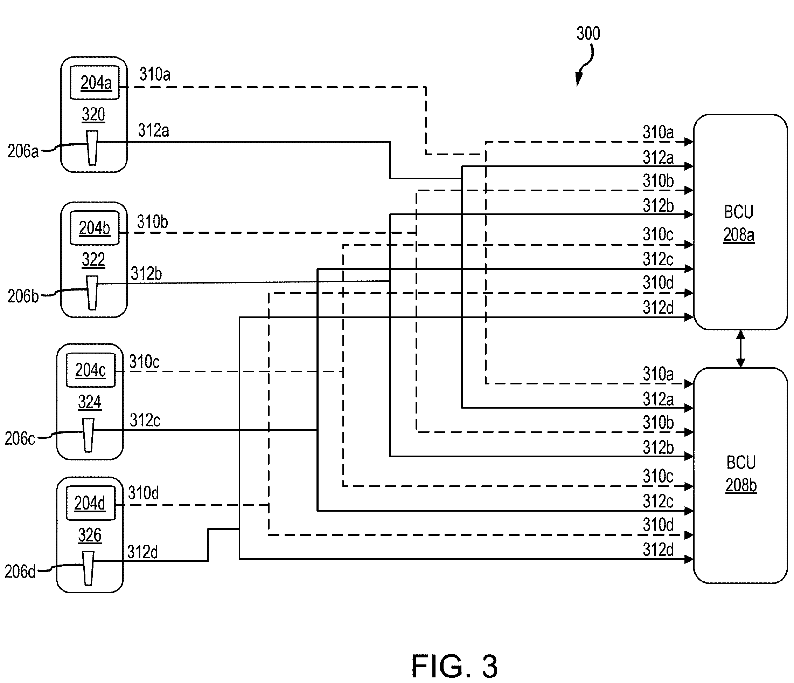

Referring now to FIG. 3, in accordance with various embodiments, a brake control architecture 300 is illustrated. Brake control architecture 300 may be used by a pilot and co-pilot to control brakes (e.g., first brake 140 and second brake 142) of an aircraft 100, for example. Brake control architecture 300 includes similar components to brake control architecture 200 described above with respect to FIG. 2. Notably, brake control architecture 300 includes a first pilot pedal 320, a second pilot pedal 322, a first co-pilot pedal 324, a second co-pilot pedal 326, a first brake controller 208a, and a second brake controller 208b. Each pedal 320, 322, 324, 326 includes a position sensor 204 and a pedal sensor 206, as described above with respect to FIG. 2.

As illustrated, first pilot pedal 320 includes position sensor 204a and pedal sensor 206a. Second pilot pedal 322 includes position sensor 204b and pedal sensor 206b. First co-pilot pedal 324 includes position sensor 204c and pedal sensor 206c. Second co-pilot pedal 326 includes position sensor 204d and pedal sensor 206d. Position sensors 204 (i.e., 204a, 204b, 204c, and 204d) and pedal sensors 206 (i.e., 206a, 206b, 206c, 206d) include the various features described above with respect to FIG. 2 which are not repeated here. Each position sensor 204 is configured to send a command 310 to first brake controller 208a and second brake controller 208b, as described above with respect to FIG. 2. Each pedal sensor 206 is configured to send a command 312 to first brake controller 208a and second brake controller 208b, as described above with respect to FIG. 2.

The pilot uses first pilot pedal 320 to control a first brake, such as a brake for first landing gear 110. The pilot uses second pilot pedal 322 to control a second brake, such as a brake for third landing gear 130. This configuration allows the pilot to control the first brake with one foot (e.g., left foot) and the second brake with the other foot (e.g., right foot). Controlling first brake and second brake independently allows the pilot to steer aircraft 100 using the first and second brakes.

The co-pilot uses first co-pilot pedal 324 to control the first brake and second co-pilot pedal 326 to control the second brake. Similar to the pilot, this configuration allows the co-pilot to control the first brake with one foot (e.g., left foot) and the second brake with the other foot (e.g., right foot). This configuration allows either the pilot or the co-pilot to control the first and second brakes. At times, both the pilot and the co-pilot may be pressing one or more pedals 320, 322, 324, 326. When this happens, first brake controller 208a and/or second brake controller 208b may determine which input to use based on which set of pedals is being pressed harder (e.g., with more force or more distance travelled). First brake controller 208a and/or second brake controller 208b may then apply the brakes in response to the determination of which input to use.

Position sensor 204a sends command 310a to first brake controller 208a and second brake controller 208b in response to first pilot pedal 320 being pressed. Pedal sensor 206a sends command 312a to first brake controller 208a and second brake controller 208b in response to first pilot pedal 320 being pressed. Similarly, position sensor 204b sends command 310b to first brake controller 208a and second brake controller 208b in response to second pilot pedal 322 being pressed. Pedal sensor 206b sends command 312b to first brake controller 208a and second brake controller 208b in response to second pilot pedal 322 being pressed.

Position sensor 204c sends command 310c to first brake controller 208a and second brake controller 208b in response to first co-pilot pedal 324 being pressed. Pedal sensor 206c sends command 312c to first brake controller 208a and second brake controller 208b in response to first co-pilot pedal 324 being pressed. Similarly, position sensor 204d sends command 310d to first brake controller 208a and second brake controller 208b in response to second co-pilot pedal 326 being pressed. Pedal sensor 206d sends command 312d to first brake controller 208a and second brake controller 208b in response to second co-pilot pedal 326 being pressed.

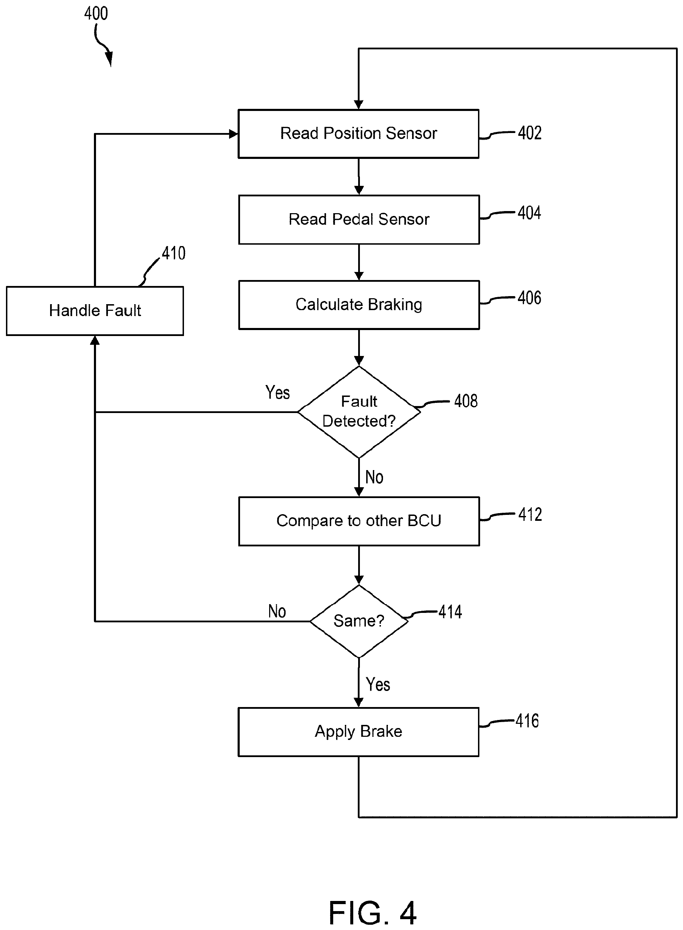

Referring now to FIG. 4, in accordance with various embodiments, illustrated is a method 400 for controlling braking of aircraft 100. In various embodiments, method 400 may be performed by first brake controller 208a and/or second brake controller 208b. In various embodiments, method 400 may be performed by one or more processors in one or more computer systems. For simplicity, the discussion below will refer to first brake controller 208a as performing method 400. Furthermore, references will be made in the discussion below to position sensor 204 and pedal sensor 206, described above with respect to FIGS. 2 and 3.

At block 402, first brake controller 208a reads an output value from position sensor 204 of a brake pedal, such as pedal 202. First brake controller 208a either reads a value from position sensor 204 that correlates to a position of pedal 202 or does not read an output from position sensor 204. In various embodiments, the value from position sensor 204 may be a voltage value. In various embodiments, position sensor 204 continuously sends output to first brake controller 208a in response to pedal 202 being pressed and first brake controller 208a reads the output from position sensor 204 at discrete time intervals, such as for example, from about 1 ms to about 100 ms, and more specifically, about 10 ms to about 50 ms. In various embodiments, first brake controller 208a may read an output value from a position sensor 204 on more than one pedal, such as for example, position sensors 204 associated with first pilot pedal 320, second pilot pedal 322, first co-pilot pedal 324, and second co-pilot pedal 326.

At block 404, first brake controller 208a reads an output value from pedal sensor 206 of brake pedal 202. First brake controller 208a either reads a value from pedal sensor 206 that indicates pedal 202 is being pressed or does not read an output from pedal sensor 206. In various embodiments, the value from pedal sensor 206 may be a voltage value. In various embodiments, pedal sensor 206 continuously sends output to first brake controller 208a in response to pedal 202 being pressed and first brake controller 208a reads the output from pedal sensor 206 at discrete time intervals, such as for example, from about 1 ms to about 100 ms, and more specifically, about 10 ms to about 50 ms. In various embodiments, first brake controller 208a may read an output value from a pedal sensor 206 on more than one pedal, such as for example, pedal sensors 206 associated with first pilot pedal 320, second pilot pedal 322, first co-pilot pedal 324, and second co-pilot pedal 326.

At block 406, first brake controller 208a calculates an amount of braking to apply based on the values read from position sensor 204 and pedal sensor 206. First brake controller 208a may determine whether a fault occurred before calculating the amount of braking to apply. A fault may be detected when only first brake controller 208a reads output from only one of position sensor 204 and pedal sensor 206. In various embodiments, first brake controller 208a may use the truth table from TABLE 1 to determine whether a fault occurred. In various embodiments, first brake controller 208a may compare the output from position sensor 204a associated with first pilot pedal 320 and the output from position sensor 204c associated first co-pilot pedal 324 and determine which output to use for calculating the amount of braking to apply.

At decision block 408, first brake controller 208a determines whether a fault is detected. If it is determined that a fault is detected, then method 400 proceeds to block 410.

At block 410, first brake controller 208a handles the detected fault. In various embodiments, this may include switching control of braking to second brake controller 208b. In various embodiments, this may include alerting the pilot and/or co-pilot of the fault. In various embodiments, this may include saving the fault to a log for later retrieval.

Returning to decision block 408, if, instead, it is determined that no fault is detected, method 400 proceeds to block 412.

At block 412, first brake controller 208a compares the calculated braking to apply to a calculated braking to apply received from second brake controller 208b. Generally, the calculated braking by both brake controllers is the same value. However, in some instances the calculated braking received by one brake controller (e.g., first brake controller 208a) may be different than the calculated braking received by the other brake controller (e.g., second brake controller 208b). For example, there may be a bad connection between a position sensor (e.g., position sensor 204) and one of the brake controllers (e.g., second brake controller 208b). As another example, one brake controller (e.g., the second brake controller 208b) may have an internal error causing a difference between the two brake controllers.

At decision block 414, first brake controller 208a determines whether the calculated braking is the same, or similar, to that provided by second brake controller 208b. If it is determined that the calculated braking is different, method 400 proceeds to block 410 where first brake controller 208a handles the fault. If, instead, it is determined that the calculated braking is the same, then method 400 proceeds to block 416.

At block 416, first brake controller 208a applies the calculated braking to the brake. This may include sending a message to the brakes to apply braking.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Finally, it should be understood that any of the above described concepts can be used alone or in combination with any or all of the other above described concepts. Although various embodiments have been disclosed and described, one of ordinary skill in this art would recognize that certain modifications would come within the scope of the invention as defined by the claims.

## Claims

1. A method of braking an aircraft, comprising:
receiving, by a brake controller (150), a first signal from a position sensor (204) of a first pedal (202), wherein the position sensor provides an indication of how much the first pedal is displaced, the first signal including an indication of the amount of displacement of the first pedal;
receiving, by the brake controller, a second signal from a pedal sensor (206) of the first pedal;
determining, by the brake controller, that the first pedal is being pressed on the first and second signals; and
sending, by the brake controller, an instruction to apply a brake pressure in response to the determination that the first pedal is being pressed, **characterised in that** the brake controller interprets the second signal from the pedal sensor as a binary indication of whether the first pedal is being pressed or is not being pressed.

2. The method of claim 1, further comprising:
calculating, by the brake controller, an amount of pressure to apply based on the first signal.

3. The method of claim 1 or 2, wherein the instruction to apply the brake pressure is based at least in part on the first signal.

4. The method of any preceding claim, further comprising:
receiving, by the brake controller, a third signal from a second position sensor of a second pedal;
receiving, by the brake controller, a fourth signal from a second pedal sensor of the second pedal;
determining, by the brake controller, that the second pedal is being pressed further than the first pedal based on the third and fourth signals; and
sending, by the brake controller, the instruction to apply the brake pressure based on the third signal.

5. The method of any preceding claim, further comprising:
detecting, by the brake controller, a fault based at least in part on the first signal and the second signal prior to sending the instruction to apply the brake pressure.

6. An article of manufacture including a tangible, non-transitory computer-readable storage medium having instructions stored thereon that, in response to execution by a processor, cause the processor to perform the method of any preceding claim.

7. The article of manufacture of claim 6 when dependent on claim 2, wherein the operations further comprise:
receiving, by the brake controller, a second amount of pressure to apply from a second brake controller;
comparing, by the brake controller, the amount of pressure to apply and the second amount of pressure to apply; and
sending, by the brake controller, the instruction to apply the brake pressure in response to a determination that the amount of pressure and the second amount of pressure are the same.

8. A brake system for an aircraft, comprising:
a brake assembly configured to supply a brake pressure in response to a pedal (202) being displaced;
a position sensor (204) configured to provide an indication of an amount of displacement of the pedal, wherein the position sensor is configured to provide an indication of how much the pedal is displaced;
a pedal sensor (206) configured to provide an indication that the pedal is being displaced; and
a brake controller (150) configured to control the brake pressure, the brake controller configured to:
receive a first signal from the position sensor, the first signal including an indication of the amount of displacement of the pedal;
receive a second signal from the pedal sensor indicating whether the pedal is being pressed or not being pressed;
determine that the pedal is being activated; and
modify the brake pressure as a function of pedal displacement in response to the determination that the pedal is being activated, **characterised in that** the brake controller is configured to interpret the second signal from the pedal sensor as a binary indication of whether the first pedal is being pressed or is not being pressed.

9. The brake system of claim 8, wherein the determination that the pedal is being activated is based on the first signal.

10. The brake system of claim 9, wherein the determination that the pedal is being activated is further based on the second signal.

11. The brake system of claim 8 or 9, wherein the first signal provides an indication of how much pressure to apply to the brake assembly.

12. The brake system of any of claims 8 to 11 wherein the brake controller is further configured to identify a fault in the brake system based at least in part on the first signal and the second signal.

## Patentansprüche

1. Verfahren zum Bremsen eines Luftfahrzeugs, umfassend:
Empfangen, durch eine Bremssteuerung (150), eines ersten Signals von einem Positionssensor (204) eines ersten Pedals (202), wobei der Positionssensor eine Angabe darüber bereitstellt, wie weit das erste Pedal ausgelenkt ist, wobei das erste Signal eine Angabe des Auslenkungsbetrags des ersten Pedals beinhaltet;
Empfangen, durch die Bremssteuerung, eines zweiten Signals von einem Pedalsensor (206) des ersten Pedals;
Bestimmen, durch die Bremssteuerung, dass das erste Pedal auf der Grundlage des ersten und des zweiten Signals gedrückt wird; und
Senden, durch die Bremssteuerung, einer Anweisung zum Anwenden eines Bremsdrucks als Reaktion auf die Bestimmung, dass das erste Pedal gedrückt wird, **dadurch gekennzeichnet, dass** die Bremssteuerung das zweite Signal von dem Pedalsensor als eine binäre Angabe interpretiert, ob das erste Pedal gedrückt wird oder nicht gedrückt wird.

2. Verfahren nach Anspruch 1, ferner umfassend:
Berechnen, durch die Bremssteuerung, eines Druckbetrags zum Anwenden auf der Grundlage des ersten Signals.

3. Verfahren nach Anspruch 1 oder 2, wobei die Anweisung zum Anwenden des Bremsdrucks zumindest teilweise auf dem ersten Signal basiert.

4. Verfahren nach einem der vorhergehenden Ansprüche, ferner umfassend:
Empfangen, durch die Bremssteuerung, eines dritten Signals von einem zweiten Positionssensor eines zweiten Pedals;
Empfangen, durch die Bremssteuerung, eines vierten Signals von einem zweiten Pedalsensor des zweiten Pedals;
Bestimmen, durch die Bremssteuerung, dass das zweite Pedal auf der Grundlage des dritten und des vierten Signals weiter als das erste Pedal gedrückt wird; und
Senden, durch die Bremssteuerung, der Anweisung zum Anwenden des Bremsdrucks auf der Grundlage des dritten Signals.

5. Verfahren nach einem der vorhergehenden Ansprüche, ferner umfassend:
Detektieren, durch die Bremssteuerung, eines Fehlers auf der Grundlage zumindest teilweise des ersten Signals und des zweiten Signals vor dem Senden der Anweisung zum Anwenden des Bremsdrucks.

6. Herstellungsgegenstand, beinhaltend ein materielles, nichtflüchtiges computerlesbares Speichermedium, das darauf gespeicherte Anweisungen aufweist, die als Reaktion auf eine Ausführung durch einen Prozessor den Prozessor veranlassen, das Verfahren nach einem der vorhergehenden Ansprüche durchzuführen.

7. Herstellungsgegenstand nach Anspruch 6, wenn abhängig von Anspruch 2, wobei die Operationen ferner umfassen:
Empfangen, durch die Bremssteuerung, eines zweiten Druckbetrags zum Anwenden von einer zweiten Bremssteuerung;
Vergleichen, durch die Bremssteuerung, des Druckbetrags zum Anwenden und des zweiten Druckbetrags zum Anwenden; und
Senden, durch die Bremssteuerung, der Anweisung zum Anwenden des Bremsdrucks als Reaktion auf eine Bestimmung, dass der Druckbetrag und der zweite Druckbetrag gleich sind.

8. Bremssystem für ein Luftfahrzeug, umfassend:
eine Bremsbaugruppe, die ausgelegt ist, einen Bremsdruck zuzuführen, als Reaktion darauf, dass ein Pedal (202) ausgelenkt wird;
einen Positionssensor (204), der ausgelegt ist, eine Angabe eines Auslenkungsbetrags des Pedals bereitzustellen, wobei der Positionssensor ausgelegt ist, eine Angabe darüber bereitzustellen, wie weit das Pedal ausgelenkt ist;
einen Pedalsensor (206), der ausgelegt ist, eine Angabe bereitzustellen, dass das Pedal ausgelenkt wird; und
eine Bremssteuerung (150), die ausgelegt ist, den Bremsdruck zu steuern, wobei die Bremssteuerung ausgelegt ist zum:
Empfangen eines ersten Signals von dem Positionssensor, wobei das erste Signal eine Angabe des Auslenkungsbetrags des Pedals beinhaltet;
Empfangen eines zweiten Signals von dem Pedalsensor, das angibt, ob das Pedal gedrückt wird oder nicht gedrückt wird;
Bestimmen, dass das Pedal aktiviert wird; und
Modifizieren des Bremsdrucks als eine Funktion der Pedalauslenkung als Reaktion auf die Bestimmung, dass das Pedal aktiviert wird, **dadurch gekennzeichnet, dass** die Bremssteuerung ausgelegt ist, das zweite Signal von dem Pedalsensor als eine binäre Angabe zu interpretieren, ob das erste Pedal gedrückt wird oder nicht gedrückt wird.

9. Bremssystem nach Anspruch 8, wobei die Bestimmung, dass das Pedal aktiviert wird, auf dem ersten Signal basiert.

10. Bremssystem nach Anspruch 9, wobei die Bestimmung, dass das Pedal aktiviert wird, ferner auf dem zweiten Signal basiert.

11. Bremssystem nach Anspruch 8 oder 9, wobei das erste Signal eine Angabe darüber bereitstellt, wie viel Druck auf die Bremsbaugruppe anzuwenden ist.

12. Bremssystem nach einem der Ansprüche 8 bis 11, wobei die Bremssteuerung ferner ausgelegt ist, einen Fehler in dem Bremssystem zumindest teilweise auf der Grundlage des ersten Signals und des zweiten Signals zu identifizieren.

## Revendications

1. Procédé de freinage d'un aéronef, comprenant :
la réception, par un dispositif de commande de frein (150), d'un premier signal provenant d'un capteur de position (204) d'une première pédale (202), dans lequel le capteur de position fournit une indication de la quantité de déplacement de la première pédale, le premier signal comportant une indication de la quantité de déplacement de la première pédale ;
la réception, par le dispositif de commande de frein, d'un deuxième signal provenant d'un capteur de pédale (206) de la première pédale ;
la détermination, par le dispositif de commande de frein, que la première pédale est enfoncée aux premier et deuxième signaux ; et
l'envoi, par le dispositif de commande de frein, d'une instruction pour appliquer une pression de freinage en réponse à la détermination que la première pédale est enfoncée,
**caractérisé en ce que** le dispositif de commande de frein interprète le deuxième signal du capteur de pédale comme une indication binaire indiquant si la première pédale est ou non enfoncée.

2. Procédé selon la revendication 1, comprenant en outre :
le calcul, par le dispositif de commande de frein, d'une quantité de pression à appliquer sur la base du premier signal.

3. Procédé selon la revendication 1 ou la revendication 2, dans lequel l'instruction d'appliquer la pression de freinage est basée au moins en partie sur le premier signal.

4. Procédé selon une quelconque revendication précédente, comprenant en outre :
la réception, par le dispositif de commande de frein, d'un troisième signal provenant d'un second capteur de position d'une seconde pédale ;
la réception, par le dispositif de commande de frein, d'un quatrième signal provenant d'un second capteur de pédale de la seconde pédale ;
la détermination, par le dispositif de commande de frein, que la seconde pédale est davantage enfoncée que la première pédale sur la base des troisième et quatrième signaux ; et
l'envoi, par le dispositif de commande de frein, de l'instruction d'appliquer la pression de freinage sur la base du troisième signal.

5. Procédé selon une quelconque revendication précédente, comprenant en outre :
la détection, par le dispositif de commande de frein, d'un défaut sur la base d'au moins en partie du premier signal et du deuxième signal avant l'envoi de l'instruction d'appliquer la pression de freinage.

6. Article manufacturé comportant un support de stockage tangible non transitoire lisible par ordinateur ayant des instructions stockées sur celui-ci qui, en réponse à leur exécution par un processeur, amènent le processeur à effectuer le procédé selon une quelconque revendication précédente.

7. Article manufacturé selon la revendication 6 lorsqu'elle dépend de la revendication 2, dans lequel les opérations comprennent en outre :
la réception, par le dispositif de commande de frein, d'une seconde quantité de pression à appliquer provenant d'un second dispositif de commande de frein ;
la comparaison, par le dispositif de commande de frein, de la quantité de pression à appliquer et la seconde quantité de pression à appliquer ; et
l'envoi, par le dispositif de commande de frein, de l'instruction d'appliquer la pression de freinage en réponse à une détermination que la quantité de pression et la seconde quantité de pression sont identiques.

8. Système de freinage pour un aéronef, comprenant :
un ensemble frein configuré pour fournir une pression de freinage en réponse au déplacement d'une pédale (202) ;
un capteur de position (204) configuré pour fournir une indication d'une quantité de déplacement de la pédale, dans lequel le capteur de position est configuré pour fournir une indication de la quantité de déplacement de la pédale ;
un capteur de pédale (206) configuré pour fournir une indication que la pédale est déplacée ; et
un dispositif de commande de frein (150) configuré pour commander la pression de freinage, le dispositif de commande de frein étant configuré pour :
recevoir un premier signal du capteur de position, le premier signal comportant une indication de la quantité de déplacement de la pédale ;
recevoir un deuxième signal du capteur de pédale indiquant si la pédale est enfoncée ou non ;
déterminer que la pédale est activée ; et
modifier la pression de freinage en fonction du déplacement de pédale en réponse à la détermination que la pédale est activée, **caractérisé en ce que** le dispositif de commande de frein est configuré pour interpréter le deuxième signal du capteur de pédale comme une indication binaire indiquant si la première pédale est ou non enfoncée.

9. Système de freinage selon la revendication 8, dans lequel la détermination de l'activation de la pédale est basée sur le premier signal.

10. Système de freinage selon la revendication 9, dans lequel la détermination de l'activation de la pédale est en outre basée sur le deuxième signal.

11. Système de freinage selon la revendication 8 ou la revendication 9, dans lequel le premier signal fournit une indication de la quantité de pression à appliquer à l'ensemble frein.

12. Système de freinage selon l'une quelconque des revendications 8 à 11, dans lequel le dispositif de commande de frein est en outre configuré pour identifier un défaut dans le système de freinage sur la base au moins en partie du premier signal et du deuxième signal.
